# EUROPEAN PATENT APPLICATION

(11) **EP 3 603 819 A1**
(43) Date of publication of application: **05.02.2020**
(21) Application number: 18777032.6
(22) Date of filing: 23.03.2018
(51) Int. Cl.: B05B 13/04

(54) **ROBOT FOR PERFORMING DROPLET JETTING, AND DROPLET JETTING CONTROL METHOD FOR ROBOT**

(30) Priority: 27.03.2017 CN 201710190191
(71) Applicant: Shaanxi Hwatec Technology Co., Ltd, Xi'an, Shaanxi 710043 (CN)
(72) Inventor: SHI, Yi, Xi'an Shaanxi 710043 (CN); YANG, Futao, Xi'an Shaanxi 710043 (CN); HUANG, Xin, Xi'an Shaanxi 710043 (CN); ZHU, Chenhui, Xi'an Shaanxi 710043 (CN)
(74) Representative: karo IP
(86) International application number: PCT/CN2018/080228
(87) International publication number: WO 2018/177211

(57) **Abstract**

Provided are a robot for performing droplet jetting, and a droplet jetting control method for a robot. The robot for performing droplet jetting comprises a control system, a mechanical motion structure, a droplet jetting system, and an aerodynamic balance system. The control system implements motion control and droplet jetting control. The mechanical motion structure is a multi-degree-of-freedom mechanical structure and is used to implement a multi-degree-of-freedom motion function. The droplet jetting system is installed at the mechanical motion structure. The aerodynamic balance control system controls, according to a change in an air pressure of a nozzle, air pressures inside and outside of the nozzle to attain a balance so as to ensure a stable jetting, thereby preventing jetting of an excessive amount or an insufficient amount of droplets. The robot for performing droplet jetting can realize freer fabrication of products having planar and curved surfaces without any dead angles by performing omni-directional micro-droplet jetting.

## Description

### Technical Field

The invention belongs to droplet jetting fields, and specifically relates to a robot for droplet jetting, capable of realizing droplet jetting function on any three-dimensional object by feeding material on demand.

### Background Art

Droplet jetting is to propel a forming material with an external force to be sprayed from an orifice (nozzle) of a nozzle cavity onto a substrate in the form of a fine droplet (or a liquid flow), thereby forming two-dimensional images (words), dot arrays or three-dimensional objects. The term "fine droplet" refers to an ejected droplet with a size that can be precisely controlled in a micron order of magnitude, and with a volume that can be controlled in a microlitre, or a nanolitre, or a picolitre order of magnitude, or even a femto-litre order of magnitude. For currently available droplet jetting technologies, plane-based droplet jetting such as inkjet printing, 3D printing has become a relatively matured technology. For example, droplet jetting on flat paper, leather, plastic and other materials to form patterns freely has seen wide application. However, there is no equipment available on the market for droplet jetting to form patterns freely on the surface of an existing product. Even if there are some equipments, they can only perform vertical jetting, being linked in X-Y plane only, but the facades or curved surfaces are mostly colored, spotted, and bonded manually, which affects the efficiency and quality of mass production of the product, because the demand for droplet jetting to form patterns freely on any curved surfaces has been very urgent in recent years.

### Summary of the Invention

In order to solve the technical problems existing in the background art, the present invention provides a robot for droplet jetting capable of jetting micro droplets on a planar and a three-dimensional product with free forming, small size, wide working range as well as extensive adaptability.

In order to achieve the above objective, the present invention employs the following technical solutions:
The robot for droplet jetting of the present invention comprises a control system, a mechanical motion structure, a droplet jetting system and a pneumatic balance system; the control system performs motion control and droplet jetting control synchronously; the mechanical motion structure is configured as a mechanical structure with multi-degree-of-freedom, realizing a motion function with multiple degrees of freedom in a space; the droplet jetting system is mounted on the mechanical motion structure, realizing a droplet jetting function by using at least two nozzles having independent telescopic functions and capable of feeding material on demand; the pneumatic balance system controls gas pressures inside and outside of the nozzle as a function of a change in a gas pressure of a working nozzle to attain a balance, so as to ensure a stable jetting state without over spray or less spray.

In an embodiment, the mechanical motion structure of the present invention comprises a base, a rotary seat disposed on the base, a first swing arm disposed on the rotary seat, a second swing arm disposed at the other end of the first swing arm, a rotary arm disposed on the second swing arm, and a third swing arm disposed on the rotary arm.

In an embodiment, the droplet jetting nozzle system of the present invention is arranged at a front end of the third swing arm; the droplet jetting nozzle system comprises the droplet jetting system, a rotary shaft, a rotary body and a propelling mechanism, wherein the rotary body is provided with at least two nozzle mounting holes, and rotates around the rotary shaft, and any one of the nozzle mounting holes is movable to the propelling mechanism by rotation of the rotary body, and the propelling mechanism is used to propel the nozzle in said any one of the nozzle mounting holes out of the nozzle mounting hole or retract the nozzle outside said any one of the nozzle mounting holes back into the nozzle mounting hole.

In an embodiment, the pneumatic balance system of the invention comprises a sensing element, a gas pressure control element, a gas-liquid cylinder, a gas pipe and liquid guide pipe, wherein the sensing element is arranged in the gas-liquid cylinder to which the gas pipe is connected; the liquid guide pipe communicates the gas-liquid cylinder with the droplet jetting system.

In an embodiment, the mechanical motion structure of the present invention comprises a base, a rotary seat disposed on the base, a first swing arm disposed on the rotary seat, a second swing arm disposed at the other end of the first swing arm, a rotary arm disposed on the second swing arm, and a third swing arm disposed on the rotary arm; the pneumatic balance system comprises a sensing element, a gas pressure control element, a gas-liquid cylinder, a gas pipe and a liquid guide pipe, wherein the sensing element is arranged in the gas-liquid cylinder to which the gas pipe is connected; the liquid guide pipe communicates the gas-liquid cylinder with the droplet jetting system; the third swing arm and the rotary arm are provided with a through hole for placement of the liquid guide pipe.

The invention also provides a droplet jetting control method for a robot, the method comprising:
Step 1: generating a processing file:
   (1) acquiring a working nozzle motion trajectory file according to an image to be sprayed, and interpolating the working nozzle motion trajectory file to obtain a working nozzle motion interpolation trajectory;
   (2) generating a modeling file of the image to be sprayed, the modeling file containing modeling information which is color information or material information;
   (3) extracting the modeling information of each location point in the modeling file, acquiring the modeling information corresponding to each location point in the working nozzle motion interpolation trajectory;

   The processing file comprises: the working nozzle motion interpolation trajectory, and the modeling information corresponding to each location point in the working nozzle motion interpolation trajectory;
Step 2: setting a feed velocity of the working nozzle and the initial gas pressure leveling of the working nozzle, according to the working nozzle motion interpolation trajectory;
Step 3: controlling the motion of the droplet jetting robot according to the trajectory information of a target point in the working nozzle motion interpolation trajectory and the feed velocity of the working nozzle, so that the working nozzle reaches the target point;
Step 4: determining whether the target point is reached; performing step 5 if yes, and performing step 3 if not;
Step 5: spraying the location point according to the modeling information of the target point in the working nozzle motion interpolation trajectory and the working voltage information of the nozzle; at the same time, controlling gas pressures inside and outside of the nozzle according to a change in the gas pressure of the working nozzle to attain a balance, so as to ensure a stable jetting state without over spray or less spray;
Step 6: determining whether the target point is an end point; terminating operation if yes, and repeating steps 3 to 6 if not.

The present invention has the following advantages:
(1) By virtue of the present invention, it is possible to realize free forming by performing omni-directional droplet jetting on products having planar and curved surfaces without any dead angles. Collaboration of multiple free arms provides more freedom for the droplet nozzle, thereby making the operation more flexible. Three-dimensional graphics and characters may be directly applied on an object more easily to achieve operation of omni-directional droplet jetting without any dead angles.
(2) The pneumatic balance system of the invention allows the nozzle to have freer change in posture between the high and low pitches, without discontinuing the feed because of the height change.
(3) The droplet jetting nozzle system of the present invention is used to realize precise spraying in a microlitre (ul), or a nanolitre (nl), or a picolitre (pl) order of magnitude, or even a femto-litre (fl) order of magnitude, and to produce more complicated spraying effect by overlapping print through different nozzles with droplets of various materials. It is convenient for many applications such as production of complex electronic circuit, special medical reagent point sampling, special chemical reagent point sampling, fine chemical synthesis, etc., and particularly it is suitable for improving the application effect in these fields with the complex and precise motion function of the robot.

### Brief Description of the Drawings

- FIGS. 1-2: are schematic structural views of a device of the present invention;
- FIG. 3: is a flow chart of a control method of the present invention;
- FIG. 4: is an image to be sprayed of example 2;
- FIG. 5: is an image to be sprayed of example 3.

### Detailed Description of the Embodiments

The "method for extracting color information or material information of a corresponding location point in a modeling file, and acquiring corresponding color information or material information of each location point in a working nozzle motion interpolation trajectory" illustrated in the present invention adopts the method disclosed in ZL 2010 1 0614184.2.

In the present invention, the freedom degree of the rotary arm of the robot can be increased according to the work requirement, and also processing adaptability of workpieces can be enhanced by adding a rotary head and a sliding rail.

The modeling information of the present invention includes color information, material information, and the like.

With reference to the techniques disclosed in CN 201610349645.5, the embodiments of the droplet jetting system of the present invention can be implemented by using at least two nozzles having functions of extending and retracting independently and of feeding materials on demand to realize the droplet jetting function.

During the implementation of the control method of the present invention, CAM software can be used to program an image to be sprayed to obtain a working nozzle motion trajectory file which then is interpolated to obtain a working nozzle motion interpolation trajectory.

During the implementation of the control method of the present invention, modeling software may be used to generate a modeling file of an image to be sprayed, wherein the modeling file includes modeling information which is color information or material information.

The following are examples provided by the inventor to further illustrate the technical solution of the present invention.

### Example 1:

The robot for droplet jetting in this example comprises a control system, a mechanical motion structure, a droplet jetting system, and a pneumatic balance system; wherein the control system synchronously performs motion control and droplet jetting control.

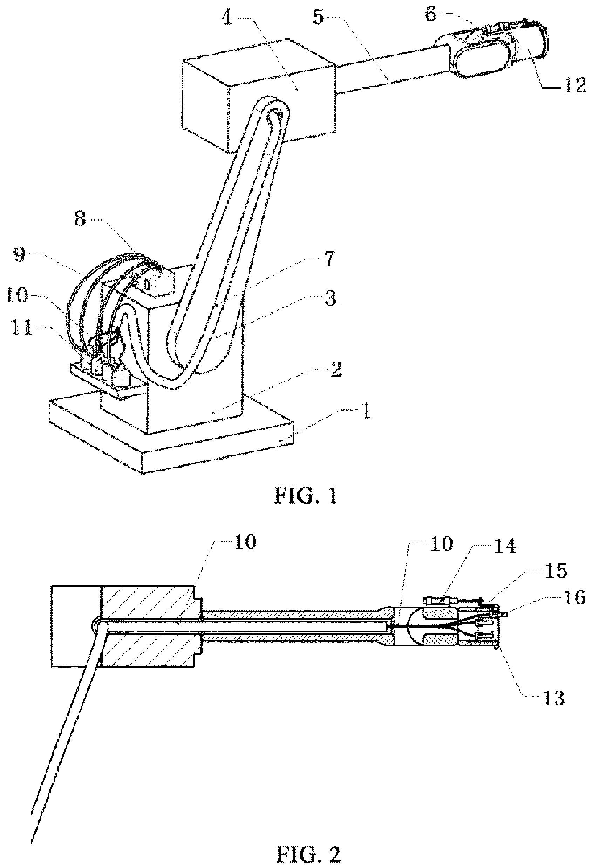

As shown in FIGS. 1-2, the mechanical motion structure comprises a base 1, a rotary seat 2, a swing arm 3, a swing arm 4, a rotary arm 5, and a swing arm 6. The base may be equipped with a rotary worktable or a movable slide rail as needed. The rotary seat 2 is arranged on the base 1 and freely rotatable about a longitudinal axis; the swing arm 3 is arranged on the rotary seat 1 and free to swing around a connection point; the swing arm 4 is arranged at the other end of the swing arm 3 and free to swing around a connection point; the rotary arm 5 is arranged on the swing arm 4 and rotatable freely about the normal axis of a contact surface; the swing arm 6 is arranged on the rotary arm 5 and free to swing around a connection point.

As shown in FIG. 2, the droplet jetting nozzle system 12 is arranged in a cavity of a built-in turntable at the front end of the swing arm 6; the built-in turntable is axially provided with at least two nozzle cavities which are parallel to each other and uniformly distributed along the circumference; according to the working requirements, a nozzle 16 may be of electric field deflection type, valve control type, thermal bubble type, piezoelectric type, electrostatic type, etc. During the working process, the turntable 13 rotates to bring the working nozzle in the same axial direction of a cylinder 14 which drives the nozzle 16 to move by means of a push rod 15.

In the pneumatic balance system, a sensing element is arranged in a gas-liquid cylinder 11; a gas pressure control element 8 is placed on the rotary seat 2 and connected to the gas-liquid cylinder 11 via a gas pipe 9; the swing arm 4 and the rotary arm 5 are provided with a through hole for placing a liquid-guide pipe 10, and the liquid-guide pipe is in communication with each nozzle; a sleeve 7 is arranged outside the exposed liquid-guide pipe 10. The balance control is started in such a manner: because a change in the pressure P in the cylinder leads to change in an output voltage V of the sensor, through a 24-bit AD acquisition of the voltage V fed back by the sensor, the system calculates the pressure P in the cylinder and compares it with a set value Ps. If|P-Ps|≤2mb, adjustment will not be made; if not, the pressure will be increased/decreased by an electrical pressure controller.

In another embodiment, on the basis of the above solution, the swing arm 4 is provided with a liquid passage therein with rounded corners, and a motor/decelerator may be installed coaxially with the rotary shaft inside or outside of the swing arm. This can also be done by transmission means such as gear and belt wheel; the rounded corner is designed to protect the liquid pipe from being damaged or clogged by edges, resulting in failure to transmit liquid normally.

In this embodiment, the rotary seat 2 has a working range or direction of plus or minus 360°, the swing arm 3 has a working range or direction of plus or minus 360°, and the swing arm 4 has a working range or direction of plus or minus 360°, and the rotary arm 5 has a working range or direction of plus or minus 360°. The gas-liquid cylinder 11 is used for storing a material in a liquid form to be sprayed. The liquid material is stored in the gas-liquid cylinder, and the gas is filled into the gas-liquid cylinder to press the liquid therein to the nozzle.

### Example 2:

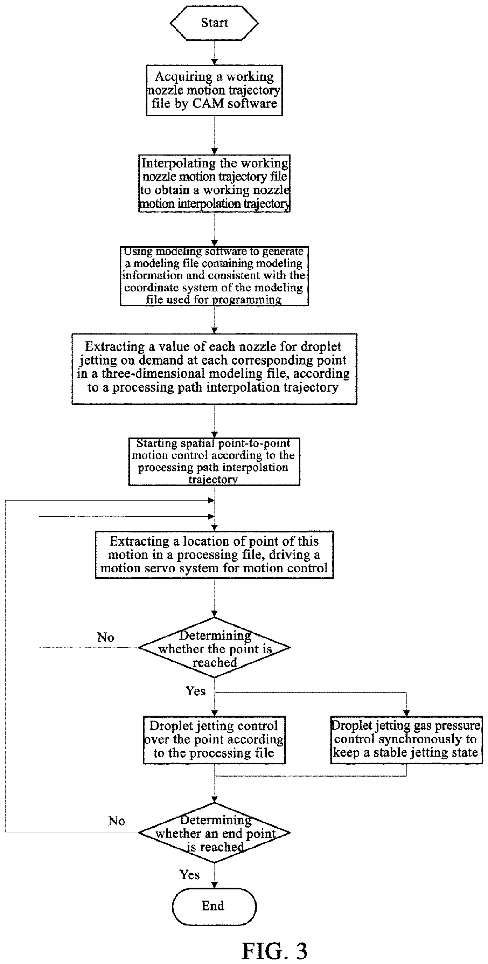

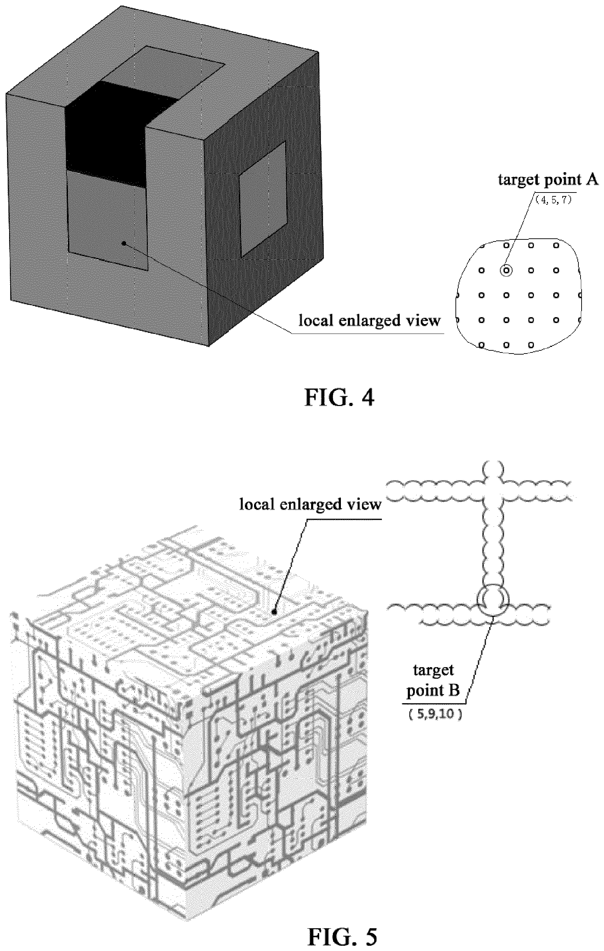

In this embodiment, colors are sprayed onto the image shown in FIG. 4, and four colors, CMYK, are filled in four nozzles respectively. The control method is as follows:
Referring to Figure 3, the entire control process is a point-by-point jetting process, such as any point A shown in FIG. 4:
Step 1: generating a processing file:
   The processing file includes a working nozzle motion interpolation trajectory, and color information corresponding to each point in the working nozzle motion interpolation trajectory:
   (1) A CAM software (such as UG) is used to program FIG. 4 to be sprayed to obtain a working nozzle motion trajectory file which is then interpolated to obtain the working nozzle motion interpolation trajectory;
   (2) A modeling software (such as 3D MAX) is used to generate a modeling file containing the color information of FIG. 4 (this modeling file is consistent with the coordinate system of the file used for programming);
   (3) The color information of corresponding location point in the modeling file containing the color information is extracted by the working nozzle motion interpolation trajectory, so that each point in the working nozzle motion interpolation trajectory corresponds to the color information in the modeling file (that is, each point corresponds to one of the colors in CMYK);
Step 2: according to the working nozzle motion interpolation trajectory, setting a feed velocity of the working nozzle (the feed velocity for spraying on a plane in FIG. 4 is 2m/min, and the feed velocity for spraying on a complex curved surface is 0.5-2m/min and is artificially set according to the complexity of the curved surface), and the initial gas pressure leveling of the working nozzle (1.2KPa±2, a control gas pressure is set according to relative height of the nozzle and an ink bottle) and a working voltage value of the nozzle (70V) and a voltage action time (20µs) (the voltage value and the action time are determined by jetting experiments performed with a high-speed camera and are entered into the system manually);
Step 3: controlling the movement of respective arm of the robot according to the trajectory information (4, 5, 7) of a target point A in the working nozzle motion interpolation trajectory and the feed velocity (2m/min) of the working nozzle, so that the working nozzle reaches the target point A;
Step 4: determine whether the target point A is reached; performing the next step if yes, and performing Step 3 if not;
Step 5: spraying this point according to the color information (C: cyan) corresponding to the point A in the working nozzle motion interpolation trajectory, and the working voltage information of the working nozzle (70V); and meanwhile controlling gas pressures inside and outside of the nozzle according to a change in the gas pressure of the working nozzle (1.2KPa±2) to attain a balance, so as to ensure a stable jetting state without over spray or less spray;
Step 6: determine whether the target point A is the end point; terminating the process if yes, and repeating steps 3 to 6 if not.

### Example 3:

In this example, a conductive solution is sprayed onto a circuit board, and a conductive material (CNT suspension) and an insulating material (impregnating paint) are respectively contained in two nozzles.
Step 1: generating a processing file:
   The processing file includes a working nozzle motion interpolation trajectory, and the material information (which refers to the conductive material or the insulating material) corresponding to each point in the working nozzle motion interpolation trajectory:
   (1) A CAM software (such as UG) is used to program FIG. 5 to be sprayed to obtain a working nozzle motion trajectory file which is then interpolated to obtain the working nozzle motion interpolation trajectory;
   (2) A modeling software (such as 3D MAX) is used to generate a modeling file containing the material information of FIG. 5 (this modeling file is consistent with the coordinate system of the file used for programming);
   (3) The material information of corresponding location point in the modeling file containing the material information is extracted by the working nozzle motion interpolation trajectory, so that each point in the working nozzle motion interpolation trajectory corresponds to the material in the modeling file containing the material information;
Step 2: according to the working nozzle motion interpolation trajectory, setting a feed velocity of the working nozzle (the feed velocity for spraying on a plane in FIG. 5 is 1.5m/min, and the feed velocity for spraying on a complex curved surface is 0.5-1.5m/min and is artificially set according to the complexity of the curved surface), and the initial gas pressure leveling of the working nozzle (5KPa±2, a control gas pressure is set according to relative height of the nozzle and an ink bottle) and a working voltage value of the nozzle (100V) and a voltage action time (20µs) (the voltage value and the action time are determined by jetting experiments performed with a high-speed camera and entered into the system manually);
Step 3: controlling the movement of respective arm of the robot according to the trajectory information (5, 9, 10) of a target point A in the working nozzle motion interpolation trajectory and the feed velocity (1.5m/min) of the working nozzle, so that the working nozzle reaches a target point B;
Step 4: determine whether the target point B is reached; performing the next step if yes, and performing Step 3 if not;
Step 5: spraying this point according to the material information (CNT suspension) corresponding to the point B in the working nozzle motion interpolation trajectory, and the working voltage information of the working nozzle (100V); and meanwhile controlling gas pressures inside and outside of the nozzle according to a change in the gas pressure of the working nozzle (5KPa±2) to attain a balance, so as to ensure a stable jetting state without over spray or less spray;
Step 6: determine whether the target point B is the end point; terminating the process if yes, and repeating steps 3 to 6 if not.

## Claims

1. A robot for droplet jetting, **characterized by** comprising a control system, a mechanical motion structure, a droplet jetting system, and a pneumatic balance system;
the control system performs motion control and droplet jetting control;
the mechanical motion structure is configured as a mechanical structure with multi-degree-of-freedom, realizing a motion function with multiple degrees of freedom in a space;
the droplet jetting system is mounted on the mechanical motion structure, realizing a droplet jetting function by using at least two nozzles having functions of extending and retracting independently and of feeding material on demand;
the pneumatic balance system controls gas pressures inside and outside of a nozzle as a function of a change in a gas pressure of the nozzle to attain a balance, so as to ensure a stable jetting state without over spray or less spray.

2. The robot for droplet jetting according to claim 1, **characterized in that** the mechanical motion structure comprises a base, a rotary seat disposed on the base, a first swing arm disposed on the rotary seat, a second swing arm disposed at the other end of the first swing arm, a rotary arm disposed on the second swing arm, and a third swing arm disposed on the rotary arm.

3. The robot for droplet jetting according to claim 2, **characterized in that** the droplet jetting nozzle system is arranged at a front end of the third swing arm; the droplet jetting nozzle system comprises the droplet jetting system, a rotary shaft, a rotary body and a propelling mechanism, wherein the rotary body is provided with at least two nozzle mounting holes, and rotates around the rotary shaft, and any one of the nozzle mounting holes is movable to the propelling mechanism by rotation of the rotary body, and the propelling mechanism is used to propel the nozzle in said any one of the nozzle mounting holes out of the nozzle mounting hole or retract the nozzle outside said any one of the nozzle mounting holes back into the nozzle mounting hole.

4. The robot for droplet jetting according to claim 1, **characterized in that** the pneumatic balance system comprises a sensing element, a gas pressure control element, a gas-liquid cylinder, a gas pipe and a liquid guide pipe, wherein the sensing element is arranged in the gas-liquid cylinder to which the gas pipe is connected; the liquid guide pipe communicates the gas-liquid cylinder with the droplet jetting system.

5. The robot for droplet jetting according to claim 1, **characterized in that** the mechanical motion structure comprises a base, a rotary seat disposed on the base, a first swing arm disposed on the rotary seat, a second swing arm disposed at the other end of the first swing arm, a rotary arm disposed on the second swing arm, and a third swing arm disposed on the rotary arm; the pneumatic balance system comprises a sensing element, a gas pressure control element, a gas-liquid cylinder, a gas pipe and a liquid guide pipe, wherein the sensing element is arranged in the gas-liquid cylinder to which the gas pipe is connected; the liquid guide pipe communicates the gas-liquid cylinder with the droplet jetting system; the third swing arm and the rotary arm are provided with a through hole for placement of the liquid guide pipe.

6. A droplet jetting control method for a robot, **characterized by** comprising:
Step 1: generating a processing file:
(1) acquiring a working nozzle motion trajectory file according to an image to be sprayed, and interpolating the working nozzle motion trajectory file to obtain a working nozzle motion interpolation trajectory;
(2) generating a modeling file of the image to be sprayed, the modeling file containing modeling information which is color information or material information;
(3) extracting the modeling information of each location point in the modeling file, acquiring the modeling information corresponding to each location point in the working nozzle motion interpolation trajectory;
the processing file comprises: the working nozzle motion interpolation trajectory, and the modeling information corresponding to each location point in the working nozzle motion interpolation trajectory;
Step 2: setting a feed velocity of the working nozzle and the initial gas pressure leveling of the working nozzle, according to the working nozzle motion interpolation trajectory;
Step 3: controlling the motion of the droplet jetting robot according to the trajectory information of a target point in the working nozzle motion interpolation trajectory and the feed velocity of the working nozzle, so that the working nozzle reaches the target point;
Step 4: determining whether the target point is reached; performing step 5 if yes, and performing step 3 if not;
Step 5: spraying the location point according to the modeling information of the target point in the working nozzle motion interpolation trajectory and the working voltage information of the nozzle; at the same time, controlling gas pressures inside and outside of the nozzle according to a change in the gas pressure of the working nozzle to attain a balance, so as to ensure a stable jetting state without over spray or less spray;
Step 6: determining whether the target point is an end point; terminating the operation if yes, and repeating steps 3 to 6 if not.
